Europäisches Patentamt

European Patent Office

Office européen des brevets

(11) Publication number: **0 215 641**
**A2**

## (12) EUROPEAN PATENT APPLICATION

(21) Application number: **86307004.1**

(22) Date of filing: **11.09.86**

(51) Int. Cl.⁴: **G 01 M 7/00**

(30) Priority: **11.09.85 GB 8522501**

(43) Date of publication of application:
**25.03.87 Bulletin 87/13**

(84) Designated Contracting States: **DE FR IT NL SE**

(71) Applicant: **THE MARCONI COMPANY LIMITED**
**The Grove Warren Lane**
**Stanmore Middlesex HA7 4LY (GB)**

(72) Inventor: **Batchford, John Keith**
**53 Waren Road**
**Braintree Essex CM7 6PB (GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN (GB)**

(54) Vibration testing apparatus.

㉗ Vibration testing apparatus suitable for testing a plurality of electronic units in more than one orientation, in which the said units are fixed on a rigid open frame structure which may be rotated in such a way as to automatically test each of the said electronic units for tolerance to vibration in each of three mutually perpendicular directions.

EP 0 215 641 A2

**Description**

VIBRATION TESTING APPARATUS

This invention relates to a vibration testing apparatus. It arose in connection with the testing of electronic units but is also applicable to the testing of other, e.g. mechanical, units.

It is often required to test a unit's tolerance to vibration and in order to carry out an effective test it is frequently deemed necessary to vibrate the unit in three mutually orthogonal directions. In the past this has been done using a vibrating table which is driven rapidly up and down in order to vibrate a unit fixed to its surface. After one such test has been completed the unit is unclamped, repositioned at a different orientation on the table and re-clamped in position. The vibration test is then repeated. The whole procedure is repeated again for the third and final orientation.

Because of the need repeatedly to clamp and unclamp the unit the testing process can be both time consuming and labour intensive. Furthermore it may be difficult or impossible to clamp some awkwardly shaped objects in more than one orientation on the table.

This invention provides an apparatus for vibration testing units comprising: a support; means for vibrating the support; a holder for holding a plurality of units to be tested at different orientations, the holder being adapted to be mounted on the support in such a way that it can be moved between a number of different attitudes thereby testing each unit at each of the said orientations.

It will be appreciated that by employing the invention a unit to be tested can be moved between the necessary different orientations (preferably three orthogonal orientations) simply by adjusting the holder between the aforementioned attitudes. The need for repeated clamping and unclamping can thus be avoided. Furthermore it is necessary only to clamp the unit in one orientation relative to the holder and this can eliminate the aforementioned problem with awkwardly shaped objects.

The holder can take an unlimited number of possible forms, the only essential characteristic being that in progressing through the aforementioned attitudes it should support the units to be tested in the aforementioned orientations. These orientations will normally be three mutually perpendicular orientations because, as previously mentioned, it is normally required to test a unit for tolerance to vibration in three perpendicular directions. The requirement to support the units at three mutually perpendicular orientations can be met by making the holder in such a way that it either defines a cube or defines parts of the faces of an imaginary cube. By rotating the holder about an axis passing through the centre and two opposite corners of this real or imaginary cube any unit to be tested, mounted on one of the faces, can be moved between the aforesaid orientations.

It will normally be necessary to provide some detent means to hold the holder in its different attitudes. This detent means preferably acts on one or more corners of the cube, if the holder is in the shape of a cube. The detent means is preferably formed by hydraulically operated clamps.

The said holder is preferably formed from an open frame since such a construction can be made relatively light weight yet rigid thereby optimising the efficiency with which vibrations produced by said support are transferred to the units under test.

Preferably, also, there is included means for manually adjusting the attitude of the holder, and means for holding or clamping the holder in particular attitudes.

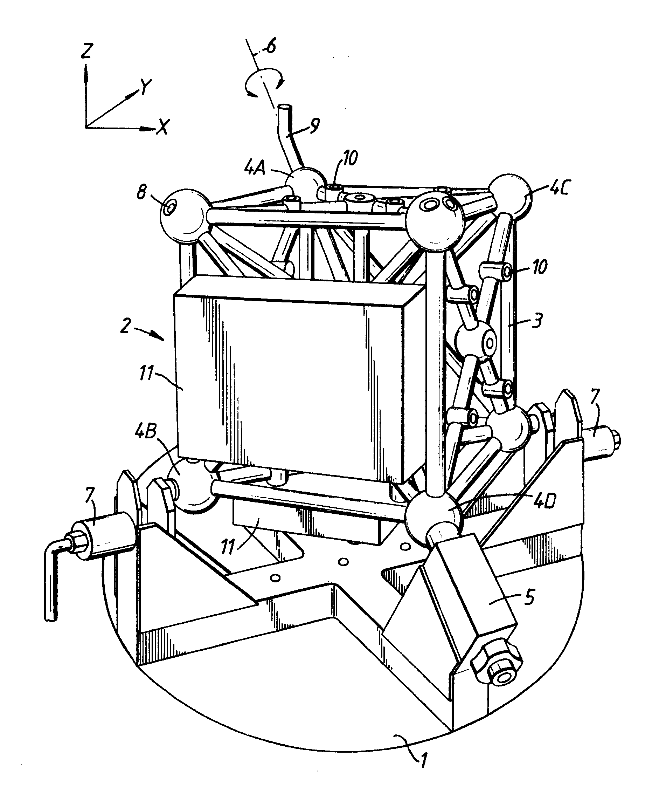

One way in which the invention may be performed will now be described by way of example with reference to the accompanying drawing, in which a vibration-testing apparatus according to this invention is illustrated.

Referring to the drawing, a vibrating table I may be vibrated in direction Z (i.e. up and down) by vibrating means (not shown). A holder 2 comprising an open frame formed from rigid, tubular members e.g. as shown at 3 joined to each other by socketted balls e.g. as shown at 4A, 4B, 4C, 4D is mounted to the vibrating table I by means of an angled bearing unit 5. An extension shaft which projects from the ball 4D at one corner of the holder 2 is accepted by the bearing unit 5 in such a way as to allow rotation of the holder 2 about an axis 6 extending from ball 4A to ball 4D. Three detent devices in the form of hydraulic clamps 7 (one not shown) are mounted on the vibrating table I. When activated the clamps 7 engage in location holes 8 on the outside surfaces of those socketted balls 4 which are positioned at the corners of the lower face of the structure 2.

Means is provided for adjusting the attitude of the holder by rotating it about axis 6. In the illustration it is shown as a handle 9 but it will be appreciated that other possibilities such as an electric motor could be used. After the holder has rotated through 120° about its axis of rotation 6, it may be clamped by the hydraulic clamps 7 in this new attitude.

If each face of the holder 2 is identified, and its starting orientation is noted, then it will be seen that, each time it is rotated 120° about its axis 6, each face moves into an orientation which is at 90° to its previous orientation. After three such rotations, the structure is returned to its previous position, and each face has been through each of three major axes: X, Y and Z.

Fixing bosses 10 are used to fix electronic units II to any or all faces of the holder 2.

By vibrating the vibrating table I when the structure 3 is clamped in position, and then rotating the holder through two successive 120° intervals, clamping at each new position, and vibrating the vibrating table I at each new position, and electronic unit II fixed to any one of the six faces of the holder 2 will be vibrated in each of the three major axes.

## Claims

I. Apparatus tor vibration-testing units comprising; a support; means for vibrating the support; a holder for holding a plurality of units to be tested at different orientations, the holder being adapted to be mounted on the support in such a way that it can be moved between a number of different attitudes thereby testing each unit at each of the said orientations.

2. Apparatus according to claim I in which the holder has six sides forming respective sides of or parts of sides of a real or imaginary cube and includes means for holding respective units to be tested on those sides.

3. Apparatus according to claim 2 in which the holder is mounted for rotation about an axis passing through the centre of the cube and diagonally opposite corners of it and in which detent means is included to hold the holder in the said different attitudes.

4. Apparatus according to claim 3 in which the said cube is real, being defined by the holder, and in which the detent means acts on corners of the cube.

5. Apparatus according to any preceding claim in which the holder is a rigid open frame structure.

6. Apparatus according to claim 5 in which the rigid open frame structure is formed by rigid tubular members jointed together by socketted balls.